# EUROPEAN PATENT APPLICATION

(11) **EP 4 414 050 A1**
(43) Date of publication of application: **14.08.2024**
(21) Application number: 22894694.3
(22) Date of filing: 10.11.2022
(51) Int. Cl.: B01D 53/18

(54) **STRUCTURE OF THROUGH-FLOW-TYPE PROFILE COLUMN PLATE AND INSTALLATION METHOD THEREFOR**

(30) Priority: 18.11.2021 CN 202111371520
(71) Applicant: Chongqing Green Fine Technology Co., Ltd., Chongqing 401122 (CN)
(72) Inventor: WU, Jia, Chongqing 401122 (CN)
(74) Representative: ZBM Patents - Zea, Barlocci & Markvardsen
(86) International application number: PCT/CN2022/131003
(87) International publication number: WO 2023/088157

(57) **Abstract**

The present invention relates to a structure of a through-flow-type profile column tray and an installation method therefor. The structure includes a supporting ring, supporting beams, and column tray sub-blocks assembled in the supporting ring, where each column tray sub-block includes the side plate, the supporting plate and the profile; and a plurality of layers of profiles are provided in a vertical direction, and a plurality of profiles are provided in each layer in a horizontal direction. The profiles pass through holes formed in the supporting plate, both ends of each profile are inserted into holes formed in the side plate, and contact parts of the profiles and the holes are fixed by means of spot welding, so that a column tray sub-block is formed. The holes in the supporting plate and the side plate provide support and limiting for the profiles, thereby improving the installation precision of the profiles; and the supporting plate and the side plate can also serve as the supporting beams of the column tray, thereby improving the structural strength of the column tray. Corners of adjacent column tray sub-blocks enclose and form a complete catching groove, which is fastened by means of a retaining plate, and the retaining plate is provided with a connecting hole corresponding to the catching groove; and the supporting beams and the supporting ring are provided with positioning holes corresponding to the catching grooves, and the column tray sub-blocks are fixed by means of inserting fixing bolts, such that installation of the column tray is completed, displacement of the column tray is limited, and disassembly of the column tray is facilitated.

## Description

### FIELD OF TECHNOLOGY

The present invention is in the field of column internals and relates to a through-flow-type profile column tray and an installation method therefor.

### BACKGROUND

The through-flow column tray is a kind of gas-liquid counter-flow column tray without down-comers. The gas flows from bottom to top and the liquid flows from top to bottom through the column tray gap to contact with each other, where the through-flow angular profile column tray is of a simple structure, has a good anti-blocking effect, large treatment capacity and low costs, and is widely used in rectification, absorption and other unit operations in engineering. A gas-liquid contact channel of a through-flow multi-layer stepped angular profile column tray is determined by the horizontal and perpendicular distance between the upper and lower adjacent angular profiles and fixed angles of the angular profiles, therefore, it is required that the angular profiles are uniformly arranged in the horizontal and perpendicular directions, and the installation angles of the angular profiles are consistent, otherwise, the separation effect of the column tray will be affected.

At present, through-flow angular profile column trays are usually welded to fix the angular profiles on a cross beam or side plate. For a single-layer of angular profile column tray, this fixing method can barely meet the requirements. Once double layers or a plurality of layers of angular profiles are involved, it is difficult to ensure size accuracy of the column tray gap and an installation angle of the angular profiles, thus affecting the column tray efficiency.

For a super-large column tray, angular profile column tray sub-blocks are firstly made, and then several column tray sub-blocks are assembled into a column tray as a whole by means of welding or bolt coupling with a fixture flat plate, in order to compact each column tray sub-block, an installer needs to press each column tray sub-block with a cover plate or a supporting plate for welding or bolt connection, and the installation needs to be done by cooperation of a few people, which is very inconvenient and difficult to ensure the levelness of installation. The super-large column trays require more rigorous installation levelness, and the problems of low strength and easy deformation occur with an enlarged size, resulting in shorter service life of the column tray.

### SUMMARY

In view of the above, it is an objective of the present invention to provide a through-flow-type profile column tray and an installation method therefor to solve the problems of assembling conventional column tray sub-blocks into a column tray as a whole.

In order to achieve the above objective, the present invention provides the following technical solutions:
a structure of a through-flow-type profile column tray including rectangular column tray sub-blocks and arc-shaped column tray sub-blocks, where a plurality of rectangular column tray sub-blocks and arc-shaped column tray sub-blocks are each fixedly connected to an upper side of a supporting beam and horizontally assembled into a column tray in an inner area of a supporting ring;
the column tray sub-block includes the side plate, the supporting plate and the profile, a plurality of side plates are connected in a closed loop, a plurality of supporting plates are fixedly connected to the side plate and are distributed in parallel in an inner area of the side plate, a plurality of profiles are arranged in the inner area of the side plate, a plurality of layers of profiles are distributed in parallel and staggered up and down in a vertical direction and are arranged in a stepped manner, a plurality of profiles are uniformly distributed in each layer in parallel in a horizontal direction, holes adapted to the profiles are formed on the supporting plate and the side plate, the profiles pass through the holes in the supporting plate and an end of each profile is inserted into each hole in the side plate, and the profiles are fixedly connected to the holes in the side plate at the contact parts;
corners of adjacent column tray sub-blocks enclose and form a complete catching groove fastened by means of a retaining plate provided on an upper side thereof, and the retaining plate is provided with a connecting hole corresponding to the catching groove, positioning holes corresponding to the catching groove are provided on the supporting beams and the supporting ring, fixing bolts are respectively inserted into the connecting hole of the retaining plate, the positioning holes of the catching groove and the supporting beams, and the connecting hole of the retaining plate, the positioning holes of the catching groove and the supporting ring for fastening cooperating with fixing nuts.

Further, fixing nut brackets are respectively fixedly connected to the lower sides of the supporting beams and the supporting rings corresponding to the positioning holes, the fixing nuts are provided on the fixing nut brackets, and rotation stopping and limiting are performed on the fixing nuts.

Further, the fixing nut brackets are U-shaped, an open end is buckled on the supporting beam or the supporting ring, each fixing nut is placed in an inner space of the fixing nut bracket, and a through hole largerthan an inner hole of the fixing nut is correspondingly provided on the fixing nut bracket for the fixing bolt to pass through; the inner space of the fixing nut bracket is slightly larger than that of the fixing nut to prevent the fixing nut from rotating. Further, a plurality of layers of profiles are a combination of one or more of an angular profile, a triangular profile, a square profile and a circular profile.

Further, a perpendicular interval between the upper and lower adjacent two layers of profiles are equal, the profile center lines between the odd-numbered layers and the profile center lines between the even-numbered layers are aligned in the perpendicular direction.

Further, a horizontal gap between two adjacent profiles of the uppermost layer of a plurality of layers of profiles is greater than the horizontal gap between two adjacent profiles of the other layers, and the horizontal gap between two adjacent profiles of the uppermost layer is a defoaming structure.

Further, a size of each profile of the uppermost layer is 0.5 to 0.8 times that of each profile of the other layers.

An installation method for a through-flow-type profile column tray as described above includes the steps of:
installing column tray sub-blocks: inserting each profile through a hole in the supporting plate, inserting both ends of the profile into a hole in the side plate, and fixing contact parts of the profile and the holes in the supporting plate and the side plate by spot welding to form a column tray sub-block;
installing a column tray: assembling and placing each column tray sub-block on the supporting ring and the supporting beam, fastening a catching groove formed by adjacent column tray sub-blocks together with a retaining plate on an upper side of the column tray sub-block, then respectively and successively passing the fixing bolts through the connecting holes of the retaining plate, the catching grooves and the positioning holes in the supporting beams, and the connecting holes of the retaining plate, the catching grooves and the positioning holes in the supporting ring, and fastening the column tray sub-block cooperating with the corresponding fixing nuts to complete the installation of the column tray.

Further, fixing nut brackets are pre-welded at the positioning hole corresponding to a lower side of the supporting beam and the supporting ring, on which the fixing nut is placed, and when the column tray sub-blocks are fixed by means of the fixing bolts, the fixing nut brackets limit the fixing nuts placed thereon to prevent a follow-up rotation.

The advantageous effect of the present invention is that
(1) by providing the holes in the supporting plate and the side plate, the profiles can be limited in plane displacement and three-dimensional displacement, so that the positioning of a plurality of layers of profiles are more accurate and the installation is easier; at the same time, the profiles are evenly arranged in the horizontal and vertical directions, and the installation angles of the profiles are consistent, which ensures the uniformity of gas-liquid contact and improves the efficiency of the column tray;
(2) the horizontal gap between two adjacent profiles of the uppermost layer is provided to be greater than the horizontal gap between two adjacent profiles of the other layers, the horizontal gap between each profile of the other layers ensures that the gas and liquid are fully contacted, the horizontal gap between the profiles of the uppermost layer increases, the gas velocity decreases, and impurities and liquid droplets flow to the lower layer under the action of gravity to play a defoaming effect; there is no need to add a defoamer, and each column tray has a defoaming function, the defoaming efficiency is greatly improved, the gas-liquid separation space is reduced, the required column tray interval is reduced, the overall equipment height is reduced while reducing equipment costs;
(3) by providing a retaining plate with connecting holes to connect a plurality of column tray sub-blocks and fixing same on supporting beams or a supporting ring via fixing nuts and fixing bolts, the retaining plate not only plays a connecting role, but also limits the displacement of the column tray, so that the installation and disassembly of the column tray are more convenient;
(4) the supporting plate and the side plate not only play the role of fixing the profile, but also can be used as the supporting beams of the column tray itself to solve the support and strength problems of the large column tray; and
(5) by providing the fixing nut brackets and welding same on the supporting beams and the supporting ring in advance, it cannot only effectively prevent follow-up rotation of the fixing nuts, but also realize the fast installation and disassembly of the fixing nuts conveniently, guarantee the fixing nut performance and ensure the assembly quality.

Additional advantages, objectives, and features of the present invention will be set forth in part in the description which follows and in part will become apparent to a person skilled in the art in the art upon examination of the following or may be learned from practice of the present invention. The objectives and other advantages of the present invention may be realized and obtained by the following description.

### BRIEF DESCRIPTION OF THE DRAWINGS

In order that the objectives, aspects and advantages of the present invention will become more apparent, preferred embodiments of the present invention will be described with reference to the accompanying drawings, in which:
FIG. 1 is a schematic structural diagram showing a through-flow type angular profile column tray according to Embodiment 1 of the present invention;
FIG. 2 is a schematic structural diagram showing a rectangular column tray sub-block;
FIG. 3 is a schematic structural diagram showing an arc-shaped column tray sub-block;
FIG. 4 is a schematic structural diagram showing a supporting plate of a column tray sub-block;
FIG. 5 is a schematic structural diagram showing a retaining plate;
FIG. 6 is a schematic structural diagram showing a fixing nut bracket;
FIG. 7 is a schematic structural diagram showing a supporting plate of a column tray sub-block according to Embodiment 2 of the present invention.

Reference numerals: column tray 1, supporting plate 2, side plate 3, retaining plate 4, supporting ring 5, supporting beam 6, rectangular column tray sub-block 7, arc-shaped column tray sub-block 8, short side plate 9, long side plate 10, angular profile 11, short side plate 12, long side plate 13, arc-shaped side plate 14, triangular hole 15, catching groove 16, connecting hole 17, fixing nut 18, fixing nut bracket 19, positioning hole 20.

### DESCRIPTION OF THE EMBODIMENTS

Additional advantages and utility of the present invention will become readily apparent to a person skilled in the art from the following detailed description, where specific embodiments of the present invention are shown and described. The present invention is capable of other and different embodiments, and its several details are capable of modifications and variations, without departing from the spirit of the present invention. It should be noted that the illustrations provided in the following examples merely illustrate the basic idea of the present invention in a schematic way and that the embodiments and the features of the embodiments can be combined with each other without conflict.

The drawings are for illustrative purposes only and are shown in schematic form rather than in physical form and are not to be construed as limiting the present invention; in order to better illustrate embodiments of the present invention, certain features of the drawings may be omitted, enlarged or reduced in size and may not represent actual product sizes. It will be appreciated by a person skilled in the art that certain well-known structures and descriptions thereof may be omitted from the figures.

The same or similar reference numerals in the drawings of the embodiments of the present invention correspond to the same or similar components; in the description of the present invention, it should be understood that if there is an orientation or positional relationship indicated by the terms "upper", "lower", "left", "right", "front", "rear", etc., based on the orientation or positional relationship shown in the drawings, it is only for convenience of description and simplification of description, but it is not intended to indicate or imply that the device or element referred to must have a specific orientation, be constructed and operated in a specific orientation, and therefore the terms describing the positional relationship in the drawings are only used for illustrative purposes and are not to be construed as limiting the present invention, and the specific meaning of the terms described above will be understood by a person skilled in the art according to the specific circumstances.

### Embodiment 1.

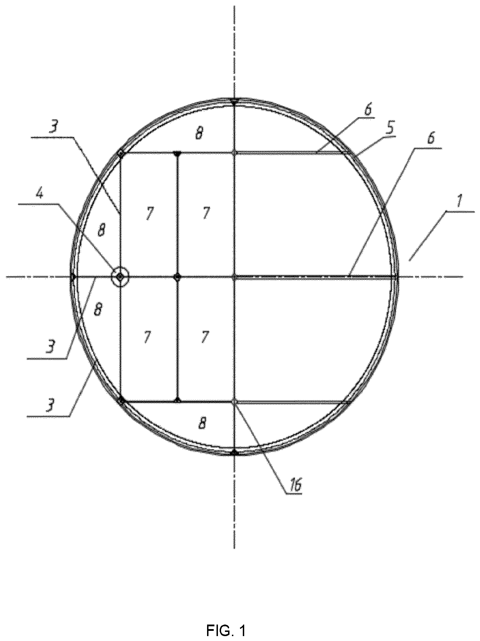

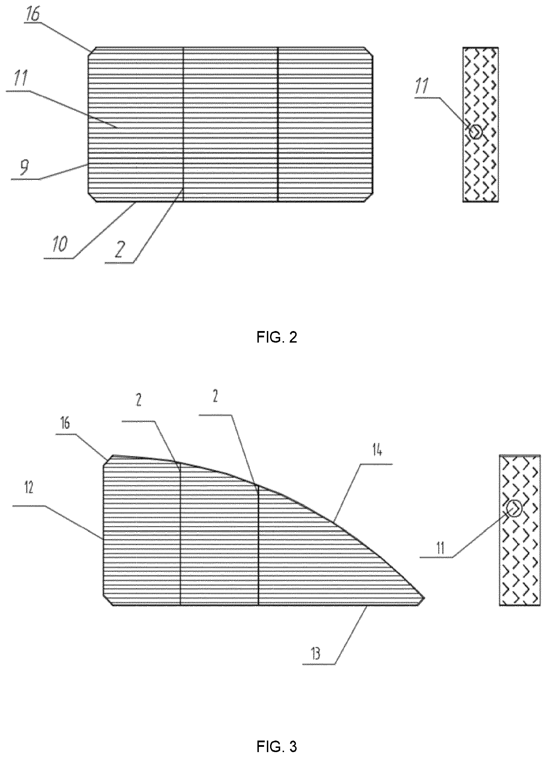

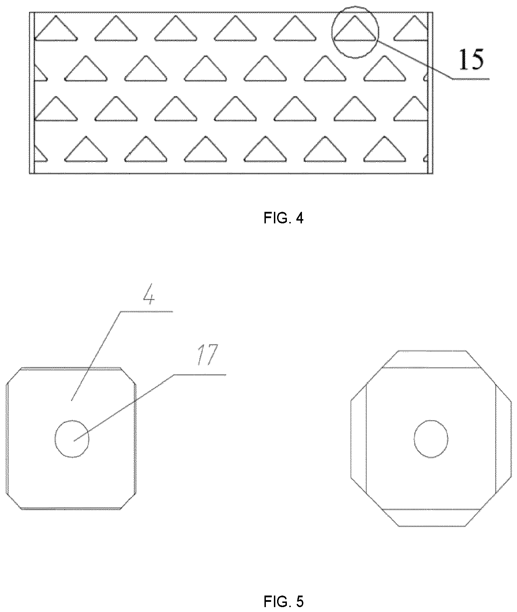

With reference to FIGS. 1-6, a structure of a through-flow-type profile column tray 1 including rectangular column tray sub-blocks 7 and arc-shaped column tray sub-blocks 8, where a plurality of rectangular column tray sub-blocks 7 and arc-shaped column tray sub-blocks 8 are each fixedly connected to an upper side of a supporting beam 6 and horizontally assembled into a column tray in an inner area of a supporting ring 5.

In this embodiment, the supporting ring 5 has a circular shape, and the area immediately around the supporting ring 5 is assembled using arc-shaped column tray sub-blocks 8, and the other area is assembled using rectangular column tray sub-blocks 7.

The column tray sub-block includes a side plate 3, a supporting plate 2 and angular profiles 11, where a plurality of side plates 3 are connected in a closed loop, the plurality of supporting plates 2 are fixedly connected to the side plate 3 and are distributed in parallel in the inner area of the side plate 3, the angular profiles 11 are each provided with an angle end facing upwards in the inner area of the side plate 3, a plurality of layers of angular profiles 11 are distributed in parallel and staggered up and down in a vertical direction, and are arranged in a stepped manner, and a plurality of angular profiles 11 are distributed uniformly and in parallel in each layer in the horizontal direction, the perpendicular intervals between the upper and lower adjacent layers of angular profiles 11 are equal, and the center lines of the angular profiles 11 between odd-numbered layers and between even-numbered layers are aligned in the perpendicular direction. The supporting plate 2 and the side plate 3 are provided with triangular holes 15 adapted to the angular profiles 11 passing through the triangular holes 15 of the supporting plate 2 and an end of each profile is inserted into the triangular hole 15 of the side plate 3, and the angular profiles 11 are fixedly connected to the triangular holes 15 at the contact parts. For the rectangular column tray sub-block 7, the side plate 3 includes a short side plate 9 and a long side plate 10; for the arc-shaped column tray sub-block 8, the side plate 3 includes a short side plate 12, a long side plate 13 and an arc-shaped side plate 14.

Corners of adjacent column tray sub-blocks enclose and form a complete catching groove 16; the catching groove 16 is fastened by a retaining plate 4 provided on an upper side thereof; the retaining plate 4 can be rectangular, octagonal or other structural types; a connecting hole 17 (a circular hole) corresponding to the catching groove 16 is provided on the retaining plate 4; and positioning holes 20 corresponding to the catching groove 16 are provided on the supporting beams 6 and the supporting ring 5.

Fixing nut brackets 19 are each fixedly connected to a lower side of the supporting beam 6 and the supporting ring 5 corresponding to the positioning hole 20, the fixing nut brackets 19 are U-shaped, an open end is buckled on the supporting beam 6 or the supporting ring 5, the fixing nut 18 is placed in the inner space of the fixing nut bracket 19, and a through hole larger than an inner hole of the fixing nut 18 is correspondingly provided on the fixing nut bracket 19 for the fixing bolt to pass through; the inner space of the fixing nut bracket 19 is slightly larger than that of the fixing nut 18 to prevent the fixing nut 18 from rotating to prevent the fixing nut 18 from rotating for rotation stopping and limiting of the fixing nut 18.

Fixing bolts are respectively inserted into the connecting hole 17 of the retaining plate 4, the positioning holes 20 of the catching groove 16 and the supporting beams 6, and the connecting hole 17 of the retaining plate 4, the positioning holes 20 of the catching groove 16 and the supporting ring 5 for fastening cooperating with the fixing nuts 18 (the positioning hole of the supporting ring 5
is used for fixing the arc-shaped column tray sub-blocks 8).

The installation method for the through-flow-type profile column tray 1 includes the following steps:
column tray sub-blocks are installed: each angular profile 11 is passed through a triangular hole 15 of a supporting plate 2, both ends of each angular profile 11 are inserted into the triangular hole 15 of the side plate 3, and contact parts of the angular profiles 11 and the triangular holes 15 are fixed by spot welding to form column tray sub-blocks;
a column tray 1 is installed: each column tray sub-block is assembled and placed on the supporting ring 5 and the supporting beam 6, the catching grooves 16 formed by adjacent column tray sub-blocks are fastened together with the retaining plate 4 on an upper side of the column tray sub-block, then the fixing bolts are respectively and successively passed through the connecting holes 17 of the retaining plate 4, the catching grooves 16, and the positioning holes 20 on the supporting beam 6 and the fixing nut 18 on the fixing nut bracket 19, and the connecting hole 17 of the retaining plate 4, the catching grooves 16, the positioning holes 20 on the supporting ring 5 and the fixing nut 18 on the fixing nut bracket 19 to complete the installation of the column tray 1.

### Embodiment 2.

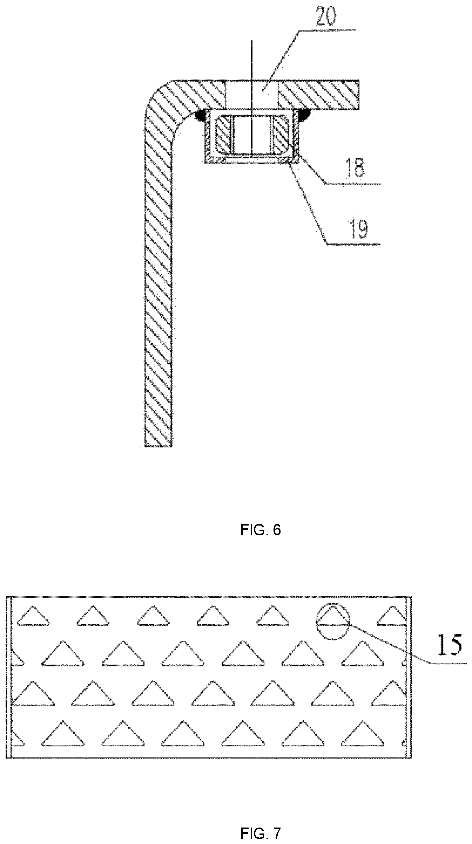

As shown in FIG. 7, this embodiment differs from Embodiment 1 in that: in the column tray sub-block, a size of each profile of the uppermost layer is 0.5-0.8 times that of the profiles of other layers, so that the horizontal gap between two adjacent profiles of the uppermost layer is greater than the horizontal gap between two adjacent profiles of other layers, and the horizontal gap between two adjacent profiles of the uppermost layer is a defoaming structure; the horizontal gaps between the profiles of other layers ensure that the gas and liquid are fully contacted, the horizontal gap between the profiles of the uppermost layer increases, the gas velocity decreases, and impurities and liquid droplets flow to the lower layer under the action of gravity to play the role of defoaming; the defoaming structure is a part of the column tray structure itself, which has the dual functions of separation and defoaming, without the need of additional defoamer, and each column tray has a defoaming function, the defoaming efficiency is greatly improved, the gas-liquid separation space is reduced, the required column tray interval is reduced, the overall equipment height is reduced while reducing equipment costs.

Finally, although the present invention has been described in detail with reference to the preferred embodiments, it should be understood by a person skilled in the art that various changes and modifications may be made therein without departing from the spirit and scope of the present invention as defined by the appended claims.

## Claims

1. A structure of a through-flow-type profile column tray, comprising rectangular column tray sub-blocks and arc-shaped column tray sub-blocks, wherein a plurality of rectangular column tray sub-blocks and arc-shaped column tray sub-blocks are each fixedly connected to an upper side of a supporting beam and horizontally assembled into a column tray in an inner area of a supporting ring;
the column tray sub-block comprises the side plate, the supporting plate and the profile, a plurality of side plates are connected in a closed loop, a plurality of supporting plates are fixedly connected to the side plate and are distributed in parallel in an inner area of the side plate, a plurality of profiles are arranged in the inner area of the side plate, a plurality of layers of profiles are distributed in parallel and staggered up and down in a vertical direction and are arranged in a stepped manner, a plurality of profiles are uniformly distributed in each layer in parallel in a horizontal direction, holes adapted to the profiles are formed on the supporting plate and the side plate, the profiles pass through the holes in the supporting plate and an end of each profile is inserted into each hole in the side plate, and the profiles are fixedly connected to the holes in the side plate at the contact parts; and
corners of adjacent column tray sub-blocks enclose and form a complete catching groove fastened by means of a retaining plate provided on an upper side thereof, and the retaining plate is provided with a connecting hole corresponding to the catching groove, positioning holes corresponding to the catching groove are provided on the supporting beams and the supporting ring, fixing bolts are respectively inserted into the connecting hole of the retaining plate, the positioning holes of the catching groove and the supporting beams, and the connecting hole of the retaining plate, the positioning holes of the catching groove and the supporting ring for fastening cooperating with fixing nuts.

2. The structure of a through-flow-type profile column tray according to claim 1, wherein fixing nut brackets are respectively fixedly connected to the lower sides of the supporting beams and the supporting rings corresponding to the positioning holes, the fixing nuts are provided on the fixing nut brackets, and rotation stopping and limiting are performed on the fixing nuts.

3. The structure of a through-flow-type profile column tray according to claim 2, wherein the fixing nut brackets are U-shaped, an open end is buckled on the supporting beam or the supporting ring, each fixing nut is placed in an inner space of the fixing nut bracket, and a through hole larger than an inner hole of the fixing nut is correspondingly provided on the fixing nut bracket for the fixing bolt to pass through; the inner space of the fixing nut bracket is slightly larger than that of the fixing nut to prevent the fixing nut from rotating.

4. The structure of a through-flow-type profile column tray according to claim 1, wherein a plurality of layers of profiles are a combination of one or more of an angular profile, a triangular profile, a square profile and a circular profile.

5. The structure of a through-flow-type profile column tray according to claim 1, wherein a perpendicular interval between the upper and lower adjacent two layers of profiles are equal, the profile center lines between the odd-numbered layers and the profile center lines between the even-numbered layers are aligned in a perpendicular direction.

6. The structure of a through-flow-type profile column tray according to claim 1, wherein a horizontal gap between two adjacent profiles of the uppermost layer of a plurality of layers of profiles is greater than the horizontal gap between two adjacent profiles of the other layers, and the horizontal gap between two adjacent profiles of the uppermost layer is a defoaming structure.

7. The structure of a through-flow-type profile column tray according to claim 6, wherein a size of each profile of the uppermost layer is 0.5 to 0.8 times that of each profile of the other layers.

8. An installation method for a through-flow-type profile column tray according to any one of claims 1 to 7, comprising the steps of:
installing column tray sub-blocks: inserting each profile through a hole in the supporting plate, inserting both ends of the profile into a hole in the side plate, and fixing contact parts of the profile and the holes in the supporting plate and the side plate by spot welding to form a column tray sub-block; and
installing a column tray: assembling and placing each column tray sub-block on the supporting ring and the supporting beam, fastening a catching groove formed by adjacent column tray sub-blocks together with a retaining plate on an upper side of the column tray sub-block, then respectively and successively passing the fixing bolts through the connecting holes of the retaining plate, the catching grooves and the positioning holes in the supporting beams, and the connecting holes of the retaining plate, the catching grooves and the positioning holes in the supporting ring, and fastening the column tray sub-block cooperating with the corresponding fixing nuts to complete the installation of the column tray.

9. The installation method for a structure of a through-flow-type profile column tray according to claim 8, wherein fixing nut brackets are pre-welded at the positioning hole corresponding to a lower side of the supporting beam and the supporting ring, on which the fixing nut is placed, and when the column tray sub-blocks are fixed by means of the fixing bolts, the fixing nut brackets limit the fixing nuts placed thereon to prevent a follow-up rotation.
